# EUROPEAN PATENT APPLICATION

(11) **EP 2 774 703 A1**
(43) Date of publication of application: **10.09.2014**
(21) Application number: 13157581.3
(22) Date of filing: 04.03.2013
(51) Int. Cl.: B22F 3/105, B29C 67/00

(54) **Apparatus for producing work pieces under elevated pressure**

(71) Applicant: SLM Solutions GmbH, 23556 Lübeck (DE)
(72) Inventor: Wiesner, Andreas, 23556 Luebeck (DE); Haack, Bodo, 23556 Luebeck (DE)
(74) Representative: Schicker, Silvia

(57) **Abstract**

An apparatus (10) for producing three-dimensional work pieces, the apparatus (10) comprises a process chamber (12) accommodating a carrier (16) and a powder application device (14) for applying a raw material powder onto the carrier (16), and an irradiation device (18) for selectively irradiating electromagnetic or particle radiation onto the raw material powder applied onto the carrier (16) in order to produce a work piece made of said raw material powder by an additive layer construction method. The process chamber (12) is sealable against the ambient atmosphere, is adapted to be held under an elevated pressure which is higher than the ambient pressure, and is provided with a first gas passageway (38) for supplying the process chamber with a first gas from a gas source (40) and a second gas passageway (42) for discharging from the process chamber (12) a second gas present within the process chamber (12) prior to supplying the first gas from the gas source (40) to the process chamber (12). The first and the second gas passageway (38, 42) are positioned in dependence on a ratio between a specific density of the first gas supplied to the process chamber (12) from the gas source (40) and a specific density of the second gas present within the process chamber (12) prior to supplying the first gas from the gas source (40) to the process chamber (12) such that the gas passageway (38, 42) which is flown through with the gas having the higher specific density is disposed below the gas passageway (38, 42) which is flown through with the gas having the lower specific density.

## Description

The present invention relates to an apparatus for producing three-dimensional work pieces by irradiating layers of a raw material powder with electromagnetic or particle radiation under elevated pressure.

Selective laser melting or laser sintering is an additive layering process by which pulverulent, in particular metallic and/or ceramic raw materials can be processed to three-dimensional work pieces of complex shapes. To that end, a raw material powder layer is applied onto a carrier and subjected to laser radiation in a site-selective manner in dependence on the desired geometry of the work piece that is to be produced. The laser radiation penetrating into the powder layer causes heating and consequently melting or sintering of the raw material powder particles. Further raw material powder layers are then applied successively to the layer on the carrier that has already been subjected to laser treatment, until the work piece has the desired shape and size. Selective laser melting or laser sintering can be used in particular for the production of prototypes, tools, replacement parts or medical prostheses, such as, for example, dental or orthopaedic prostheses, on the basis of CAD data.

An apparatus for producing moulded bodies from pulverulent raw materials by selective laser melting is described, for example, in EP 1 793 979 A1. The prior art apparatus comprises a process chamber which is maintained under a protective gas atmosphere and accommodates a plurality of carriers for the shaped bodies to be manufactured. A powder layer preparation system comprises a powder reservoir holder that can be moved to and fro across the carriers by means of a spindle drive in order to apply a raw material powder to be irradiated with a laser beam onto the carriers.

The invention is directed at the object of providing an apparatus which allows an efficient production of high-quality three-dimensional work pieces by irradiating layers of a raw material powder with electromagnetic or particle radiation.

These objects are addressed by an apparatus as defined in claim 1 and an apparatus as defined in claim 6.

In a first embodiment, an apparatus for producing three-dimensional work pieces comprises a process chamber accommodating a carrier and a powder application device for applying a raw material powder onto the carrier. In principle, the carrier may be rigidly fixed carrier. Preferably, however, the carrier is designed to be displaceable in vertical direction so that, with increasing construction height of a work piece, as it is built up in layers from the raw material powder, the carrier can be moved downwards in the vertical direction. The raw material powder preferably is a metallic powder, in particular a metal alloy powder, but may also be a ceramic powder or a powder containing different materials. The powder may have any suitable particle size or particle size distribution. It is, however, preferable to process powders of particle sizes < 100 µm.

The apparatus further comprises an irradiation device for selectively irradiating electromagnetic or particle radiation onto the raw material powder applied onto the carrier in order to produce a work piece made of said raw material powder by an additive layer construction method. Hence, the raw material powder applied onto the carrier may be subjected to electromagnetic or particle radiation in a site-selective manner in dependence on the desired geometry of the work piece that is to be produced. The irradiation device preferably is adapted to irradiate radiation onto the raw material powder which causes a site-selective melting of the raw material powder particles. The irradiation device may comprise at least one radiation source, in particular a laser source, and at least one optical unit for guiding and/or processing a radiation beam emitted by the radiation source. The optical unit may comprise optical elements such an object lens, in particular and f-theta lens, and a scanner unit, the scanner unit preferably comprising a diffractive optical element and a deflection mirror.

The process chamber is sealable against the ambient atmosphere, i.e. against the environment surrounding the process chamber, in order to be able to maintain a controlled atmosphere, in particular an inert atmosphere within the process chamber. For example, an Argon atmosphere or any other suitable inert gas atmosphere may be established within the process chamber. By controlling the atmosphere within the process chamber, the occurrence of undesired chemical reactions, in particular oxidation reactions, upon irradiating the raw material powder with electromagnetic or particle radiation can be prevented.

Further, the process chamber is adapted to be held under an elevated pressure which is higher than the ambient pressure, i.e. higher than 1013 mbar. By increasing the pressure in the process chamber, the evaporation temperature and hence the evaporation rate of the raw material powder upon being irradiated with electromagnetic or particle radiation may be decreased. Consequently, the splash activity, i.e. the tendency of the raw material powder to form splashes upon being irradiated with electromagnetic or particle radiation may be reduced. Moreover, by conducting the irradiation process under elevated pressure, the absorption of the laser energy and hence the efficiency of the overall process may be increased.

The process chamber is provided with a first gas passageway for supplying the process chamber with a first gas from a gas source and a second gas passageway for discharging from the process chamber a second gas present within the process chamber prior to supplying the first gas from the gas source to the process chamber. For building up a controlled gas atmosphere in the process chamber, the process chamber may be purged by supplying the first gas from the gas source into the process chamber via the first gas passageway. The second gas present within the process chamber prior to supplying the first gas from the gas source to the process chamber and later a mixture of the second gas and first gas already supplied to the process chamber may exit the process chamber via the second gas passageway.

The first and the second gas passageway are positioned in dependence on a ratio between a specific density of the first gas supplied to the process chamber from the gas source and a specific density of the second gas present within the process chamber prior to supplying the first gas from the gas source to the process chamber such that the gas passageway which is flown through with the gas having the higher specific density is disposed below the gas passageway which is flown through with the gas having the lower specific density. In other words, in case the first gas has a higher specific density than the second gas, the first gas passageway is disposed below the second gas passageway, whereas in case the first gas has a lower specific density than the second gas, the first gas passageway is disposed above the second gas passageway.

As a result of the above described positioning of the first and the second gas passageway, a gravity dependent formation of layers of the first and the second gas takes place within the process chamber upon supplying the process chamber with the first gas via the first gas passageway. In case the first gas has a higher specific density than the second gas, a layer of the first gas supplied to the process chamber via the first gas passageway is formed in a region of the first gas passageway below a layer of the second gas exiting the process chamber via the second gas passageway. In case the first gas has a lower specific density than the second gas, a layer of the first gas supplied to the process chamber via the first gas passageway is formed in a region of the first gas passageway above a layer of the second gas exiting the process chamber via the second gas passageway. Hence, an uncontrolled displacement of the second gas from the process chamber upon supplying the process chamber with the first gas is prevented. Instead, the process chamber, upon being purged by supplying the process chamber with the first gas via the first gas passageway, is flooded with the first gas in a controlled and efficient manner. As a result, the purging process may be accelerated and the amount of the first gas necessary to purge the process chamber may be reduced. The apparatus thus is suitable to produce high-quality work pieces in a particularly efficient manner.

The second gas present within the process chamber prior to supplying the first gas from the gas source to the process chamber preferably is air. The first gas supplied to the process chamber from the gas source preferably is an inert gas allowing the build-up of a controlled inert gas atmosphere in the process chamber. Basically, it is conceivable to use Nitrogen, which is available at low cost, as the first gas for building up a controlled inert gas atmosphere in the process chamber which, prior to being supplied with the first gas, is filled with air. However, the effectiveness of the positioning of the first and the second gas passageway and the resulting controlled gravity dependent flooding of the process chamber increases with increasing difference between the specific density of the first gas and the specific density of the second gas. In case the second gas is air, therefore preferably Argon or Helium is used as the first gas for building up a controlled inert gas atmosphere in the process chamber.

The apparatus may further comprise a first valve arrangement which in a first operating position is adapted to open the first gas passageway and which in a second operating position is adapted to close the first gas passageway. The first valve arrangement thus serves to control the supply of the first gas to the process chamber. Further, a second valve arrangement may be present which in a first operating position is adapted to open the second gas passageway and which in a second operating position is adapted to close the second gas passageway. A gas flow exiting the process chamber thus may be controlled by means of the second valve arrangement. The apparatus may further comprise a control device which is adapted to control the operation of the first and/or the second valve arrangement. For example, the control device may be adapted to control the first and the second valve arrangement into their first operating position in order to open the first and the second gas passageway and to thus allow the process chamber to be purged. Further, the control device may be adapted to control the first valve arrangement into its first operating position and to control the second valve arrangement into its second operating position in order to open the first gas passageway, but to close the second gas passageway and to thus achieve a pressure build-up in the process chamber.

The control device may further be adapted to control the first and the second valve arrangement in dependence on a concentration of at least a component of the second gas present in a gas stream exiting the process chamber through the second gas passageway. The concentration of at least a component of the second gas present in a gas stream exiting the process chamber may be measured by means of a suitable detection device such as, for example, a suitable gas sensor. In particular, the control device may be adapted to control the first and the second valve arrangement in dependence on an oxygen concentration in the gas stream exiting the process chamber through the second gas passageway.

Preferably, the control device is adapted to control the first valve arrangement into its first operating position and to control the second valve arrangement into its second operating position in order to achieve a pressure build-up in the process chamber when a concentration of at least a component of the second gas present in a gas stream exiting the process chamber through the second gas passageway falls below a predetermined threshold value. Specifically, the control device may be adapted to control the first valve arrangement into its first operating position and to control the second valve arrangement into its second operating position in order to open the first gas passageway, but to close the second gas passageway and to thus to achieve a pressure build-up in the process chamber when an oxygen concentration in the gas stream exiting the process chamber through the second gas passageway falls below a predetermined threshold value. This allows the build-up of a controlled inert gas atmosphere having an oxygen concentration below the predetermined threshold value in the process chamber.

In a second embodiment, an apparatus for producing three-dimensional work pieces comprises a process chamber accommodating a carrier and a powder application device for applying a raw material powder onto the carrier. Further, the apparatus comprises an irradiation device for selectively irradiating electromagnetic or particle radiation onto the raw material powder applied onto the carrier in order to produce a work piece made of said raw material powder by an additive layer construction method. The carrier, the raw material powder and the irradiation device may be configured as indicated above in connection with the first embodiment of an apparatus for producing three-dimensional work pieces.

The second embodiment of an apparatus for producing three-dimensional work pieces, however, differs from the first embodiment described above in that the process chamber is accommodated within and fluidly connected to a pressure chamber. The pressure chamber is sealable against the ambient atmosphere and adapted to be held under an elevated pressure which is higher than the ambient pressure, i.e. higher than 1013 mbar. As a result, it is no longer necessary that the process chamber is sealable against the ambient atmosphere and adapted to be held under an elevated pressure. Hence, the apparatus may be equipped with a "conventional" process chamber which is not equipped with specific sealing elements, etc., but still is suitable to be used for conducting the irradiation process under elevated pressure in order to achieve the advantages discussed above.

The pressure chamber accommodating the process chamber is provided with a first gas passageway for supplying the pressure chamber with a first gas from a gas source and a second gas passageway for discharging from the pressure chamber a second gas present within the pressure chamber prior to supplying the first gas from the gas source to the pressure chamber. Hence, for building up a controlled gas atmosphere in the pressure chamber and consequently in the process chamber accommodated in the pressure chamber, the pressure chamber may be purged by supplying the first gas from the gas source into the pressure chamber via the first gas passageway. The second gas present within the pressure chamber prior to supplying the first gas from the gas source to the pressure chamber and later a mixture of the second gas and first gas already supplied to the pressure chamber may exit the pressure chamber via the second gas passageway.

The first and the second gas passageway are positioned in dependence on a ratio between a specific density of the first gas supplied to the pressure chamber from the gas source and a specific density of the second gas present within the pressure chamber prior to supplying the first gas from the gas source to the pressure chamber such that the gas passageway which is flown through with the gas having the higher specific density is disposed below the gas passageway which is flown through with the gas having the lower specific density. Hence, in case the first gas has a higher specific density than the second gas, the first gas passageway is disposed below the second gas passageway, whereas in case the first gas has a lower specific density than the second gas, the first gas passageway is disposed above the second gas passageway.

Similar as in the above described first embodiment of an apparatus for producing three-dimensional work pieces, the positioning of the first and the second gas passageway results in a gravity dependent formation of layers of the first and the second gas within the pressure chamber upon supplying the pressure chamber with the first gas via the first gas passageway. In case the first gas has a higher specific density than the second gas, a layer of the first gas supplied to the pressure chamber via the first gas passageway is formed in a region of the first gas passageway below a layer of the second gas exiting the pressure chamber via the second gas passageway. In case the first gas has a lower specific density than the second gas, a layer of the first gas supplied to the pressure chamber via the first gas passageway is formed in a region of the first gas passageway above a layer of the second gas exiting the pressure chamber via the second gas passageway. Hence, an uncontrolled displacement of the second gas from the pressure chamber upon supplying the pressure chamber with the first gas is prevented. Instead, the pressure chamber, upon being purged by supplying the pressure chamber with the first gas via the first gas passageway, is flooded with the first gas in a controlled and efficient manner. As a result, the purging process may be accelerated and the amount of the first gas necessary to purge the pressure chamber may be reduced.

Compared to the efficiency gains which may be achieved in the first embodiment of an apparatus for producing three-dimensional work pieces, the efficiency gains which which may be achieved in the second embodiment of an apparatus for producing three-dimensional work pieces by the positioning of the first and the second gas passageway are even higher due to the pressure chamber accommodating the process chamber in the second embodiment of the apparatus having a larger volume than the process chamber.

The second gas present within the pressure chamber prior to supplying the first gas from the gas source to the pressure chamber preferably is air. The first gas supplied to the pressure chamber from the gas source preferably is an inert gas allowing the build-up of a controlled inert gas atmosphere in the pressure chamber and hence the process chamber. Basically, it is conceivable to use Nitrogen, which is available at low cost, as the first gas for building up a controlled inert gas atmosphere in the pressure chamber and the process chamber which, prior to being supplied with the first gas, are filled with air. However, the effectiveness of the positioning of the first and the second gas passageway and the resulting controlled gravity dependent flooding of the pressure chamber increases with increasing difference between the specific density of the first gas and the specific density of the second gas. In case the second gas is air, therefore preferably Argon or Helium is used as the first gas for building up a controlled inert gas atmosphere in the pressure chamber and the process chamber.

The apparatus may further comprise a first valve arrangement which in a first operating position is adapted to open the first gas passageway and which in a second operating position is adapted to close the first gas passageway. The first valve arrangement thus serves to control the supply of the first gas to the pressure chamber. Further, a second valve arrangement may be present which in a first operating position is adapted to open the second gas passageway and which in a second operating position is adapted to close the second gas passageway. A gas flow exiting the pressure chamber thus may be controlled by means of the second valve arrangement. The apparatus may further comprise a control device which is adapted to control the operation of the first and/or the second valve arrangement. For example, the control device may be adapted to control the first and the second valve arrangement into their first operating position in order to open the first and the second gas passageway and to thus allow the pressure chamber to be purged. Further, the control device may be adapted to control the first valve arrangement into its first operating position and to control the second valve arrangement into its second operating position in order to open the first gas passageway, but to close the second gas passageway and to thus achieve a pressure build-up in the pressure chamber.

The control device may further be adapted to control the first and the second valve arrangement in dependence on a concentration of at least a component of the second gas present in a gas stream exiting the pressure chamber through the second gas passageway. The concentration of at least a component of the second gas present in a gas stream exiting the pressure chamber may be measured by means of a suitable detection device such as, for example, a suitable gas sensor. In particular, the control device may be adapted to control the first and the second valve arrangement in dependence on an oxygen concentration in the gas stream exiting the pressure chamber through the second gas passageway.

Preferably, the control device is adapted to control the first valve arrangement into its first operating position and to control the second valve arrangement into its second operating position in order to achieve a pressure build-up in the pressure chamber and hence the process chamber accommodated within and fluidly connected to the pressure chamber when a concentration of at least a component of the second gas present in a gas stream exiting the pressure chamber through the second gas passageway falls below a predetermined threshold value. Specifically, the control device may be adapted to control the first valve arrangement into its first operating position and to control the second valve arrangement into its second operating position in order to open the first gas passageway, but to close the second gas passageway and to thus to achieve a pressure build-up in the pressure chamber when an oxygen concentration in the gas stream exiting the pressure chamber through the second gas passageway falls below a predetermined threshold value. This allows the build-up of a controlled inert gas atmosphere having an oxygen concentration below the predetermined threshold value in the pressure chamber and hence the process chamber.

In the second embodiment of an apparatus for producing three-dimensional work pieces the process chamber accommodated within the pressure chamber may comprise a gas inlet which is connected to the gas source. For example, the gas inlet of the process chamber may be connected to the gas source via a gas supply line which is guided into the pressure chamber through a wall of the pressure chamber in a sealing manner. The process chamber further may comprise a gas outlet which is connected to the first gas passageway of the pressure chamber for supplying the pressure chamber with the first gas from the gas source. Hence, the first gas exiting the gas source first may be directed through the process chamber for purging the process chamber before it is directed into the pressure chamber.

The gas inlet and the gas outlet of the process chamber in the second embodiment of an apparatus for producing three-dimensional work pieces may be positioned as described above for the first and the second gas passageway of the process chamber in the first embodiment of an apparatus for producing three-dimensional work pieces. Consequently, in the second embodiment of an apparatus for producing three-dimensional work pieces both, the pressure chamber and the process chamber may be flooded with the first gas in a controlled and efficient manner allowing the purging of the pressure chamber and the process chamber to be accelerated and the amount of the first gas necessary to purge the pressure chamber and the process chamber to be reduced.

Preferably, the first gas passageway for supplying the pressure chamber with the first gas from the gas source is connected to the gas outlet of the process chamber via a gas line. The gas line may have a first section extending downwards within the pressure chamber from the gas outlet of the process chamber in the direction of a base of the pressure chamber. Further, the gas line may have a second section extending substantially perpendicular to the first section and substantially parallel to the base of the pressure chamber.

A first filter may be disposed in the gas line. The first filter may serve to filter particulate impurities such as, for example, dust, soot or powder particles from the gas stream exiting the process chamber through the gas outlet of the process chamber before the gas stream is directed into the pressure chamber via the first gas passageway.

Both, the first and the second embodiment of an apparatus for producing three-dimensional work pieces may further comprise a circuit line connected to the process chamber. A conveying device may be disposed in the circuit line. In the second embodiment of an apparatus for producing three-dimensional work pieces the conveying device preferably is disposed outside of the pressure chamber. Hence, the circuit line, in the second embodiment of an apparatus for producing three-dimensional work pieces, preferably is guided into the pressure chamber through a wall of the pressure chamber in a sealing manner. A second filter may be disposed in the circuit line, which may be adapted to filter particulate impurities such as, for example, dust, soot or powder particles from a gas stream discharged from the process chamber during irradiating electromagnetic or particle radiation onto the raw material powder applied onto the carrier in order to produce a work piece made of said raw material powder by an additive layer construction method.

The apparatus may also comprise a further control device which is adapted to control the process of irradiating electromagnetic or particle radiation onto the raw material powder applied onto the carrier in order to produce a work piece made of said raw material powder by an additive layer construction method in dependence on a composition of the gas stream discharged from the process chamber via the circuit line. The control device for controlling the operation of the first and the second valve arrangement and the control device for controlling the process of irradiating electromagnetic or particle radiation onto the raw material powder may be embodied in a single control unit or may be provided in the form of separate control units.

In particular, the further control device may be adapted to interrupt the process of irradiating electromagnetic or particle radiation onto the raw material powder applied onto the carrier in order to produce a work piece made of said raw material powder by an additive layer construction method when a concentration of at least a component of the gas stream discharged from the process chamber via the circuit line exceeds a predetermined threshold value. The concentration of at least a component of the gas stream discharged from the process chamber via the circuit line may be measured by means of a suitable detection device such as, for example, a suitable gas sensor. In particular, the further control device may be adapted to interrupt the process of irradiating electromagnetic or particle radiation onto the raw material powder applied onto the carrier when an oxygen concentration in the gas stream discharged from the process chamber via the circuit line exceeds a predetermined threshold value. As a result, undesired oxidation reactions upon irradiating the raw material powder may be prevented.

Preferred embodiments of the invention in the following are explained in greater detail with reference to the accompanying schematic drawings, in which:
- Figure 1: shows a first embodiment of an apparatus for producing three-dimensional work pieces under elevated pressure, and
- Figure 2: shows a second embodiment of an apparatus for producing three-dimensional work pieces under elevated pressure.

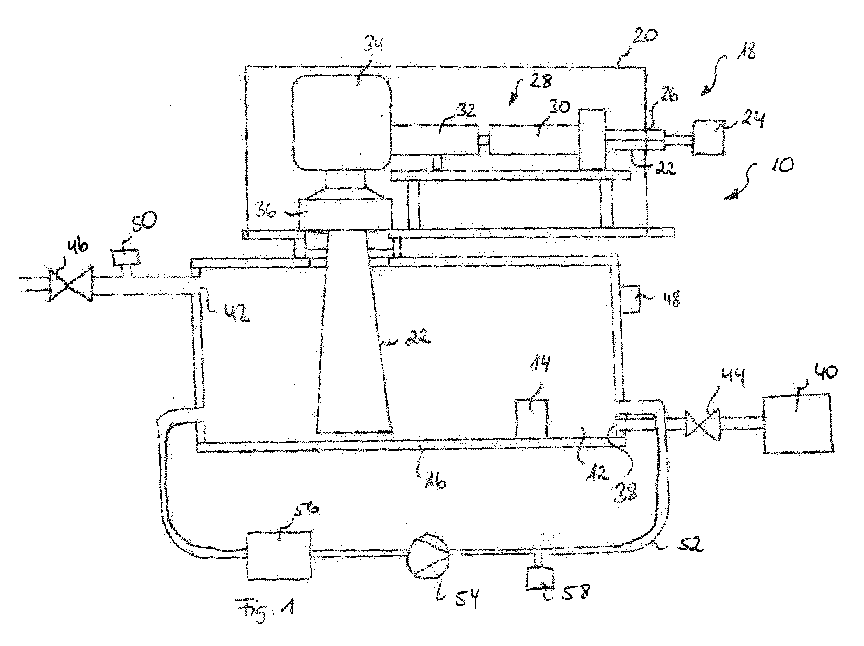

Figure 1 shows a first embodiment of an apparatus 10 for producing three-dimensional work pieces by selective laser melting (SLM^{®}). The apparatus 10 comprises a process chamber 12. A powder application device 14, which is disposed in the process chamber 12, serves to apply a raw material powder onto a carrier 16. The carrier 16 is designed to be displaceable in vertical direction so that, with increasing construction height of a work piece, as it is built up in layers from the raw material powder on the carrier 16, the carrier 16 can be moved downwards in the vertical direction.

The apparatus 10 further comprises an irradiation device 18 for selectively irradiating laser radiation onto the raw material powder applied onto the carrier 16. By means of the irradiation device 18, the raw material powder applied onto the carrier 18 may be subjected to laser radiation in a site-selective manner in dependence on the desired geometry of the work piece that is to be produced. The irradiation device 18 has a hermetically sealable housing 20. A laser beam 22 provided by a laser source 24 which may, for example, comprise a diode pumped Ytterbium fibre laser emitting laser light at a wavelength of approximately 1070 to 1080 nm is directed into the housing 20 via an opening 26. The irradiation device 18 further comprises an optical unit 28 for guiding and processing the laser beam 22, the optical unit 28 comprising optical elements such as a beam expander 30 for expanding the laser beam 22, a focusing lens 32 for focusing the laser beam 22 at a focus point, a scanner unit 34 and an object lens 36. The scanner unit 34 and the object lens 36 are shown by way of example in the form of a galvanometer scanner and an f-theta object lens. By means of the scanner unit 34, the position of the focus of the laser beam 22 both in the direction of the beam path and in a plane perpendicular to the beam path can be changed and adapted.

The process chamber 12 is sealable against the ambient atmosphere, i.e. against the environment surrounding the process chamber 12. Further, the process chamber 12 is adapted to be held under an elevated pressure which is higher than the ambient pressure, i.e. higher than 1013 mbar. The process chamber 12 is provided with a first gas passageway 38 for supplying the process chamber 12 with a first gas from a gas source 40. A second gas passageway 42 of the process chamber 12 serves for discharging from the process chamber 12 a second gas present within the process chamber 12 prior to supplying the first gas from the gas source 40 to the process chamber 12.

The first and the second gas passageway 38, 42 are positioned in dependence on a ratio between a specific density of the first gas supplied to the process chamber 12 from the gas source 40 and a specific density of the second gas present within the process chamber 12 prior to supplying the first gas from the gas source 40 to the process chamber 12 such that the gas passageway 38, 42 which is flown through with the gas having the higher specific density is disposed below the gas passageway 38, 42 which is flown through with the gas having the lower specific density. In the embodiment of an apparatus 10 shown in Figure 1, the second gas present within the process chamber 12 prior to supplying the first gas from the gas source 40 to the process chamber 12 is air. The first gas supplied to the process chamber 12 from the gas source 40 is Argon, i.e. an inert gas allowing the build-up of a controlled inert gas atmosphere in the process chamber 12 and having a specific density which is higher than the specific density of air. Hence, the first gas passageway 38 flown through with the first gas Argon is disposed below the second gas passageway 42 flown through with air.

For building up a controlled gas atmosphere in the process chamber 12, the process chamber 12 is purged by supplying Argon gas from the gas source 40 into the process chamber 12 via the first gas passageway 38. The air present within the process chamber 12 prior to supplying Argon gas from the gas source 40 to the process chamber 12 and later a mixture of air and Argon gas already supplied to the process chamber 12 exits the process chamber 12 via the second gas passageway 42. As a result of the positioning of the first and the second gas passageway 38, 42, a gravity dependent formation of layers of Argon gas and air takes place within the process chamber 12 upon supplying the process chamber 12 with the Argon gas via the first gas passageway 38. Specifically, a layer of Argon gas supplied to the process chamber12 via the first gas passageway 38 is formed in a region of the first gas passageway 38 below a layer of the air exiting the process chamber 12 via the second gas passageway 42. Hence, the process chamber 12, upon being purged by supplying the process chamber 12 with Argon gas via the first gas passageway 38, is flooded with the Argon gas in a controlled and efficient manner.

A first valve arrangement 44 in a first operating position is adapted to open the first gas passageway 38 and in a second operating position is adapted to close the first gas passageway 38. The first valve arrangement 44 thus serves to control the supply of the first gas, i.e. the Argon gas to the process chamber 12. A second valve arrangement 46 in a first operating position is adapted to open the second gas passageway 42 and in a second operating position is adapted to close the second gas passageway 42. The gas flow exiting the process chamber 12 thus may be controlled by means of the second valve arrangement 46. The first and the second valve arrangement 44, 46 are controlled by means of a control device 48.

For purging the process chamber 12 with the Argon gas provided by the gas source 40, the control device 48 controls the first and the second valve arrangement 44, 46 into their first operating position in order to open the first and the second gas passageway 38, 42. Further, in case a pressure build-up in the process chamber 12 should be achieved, the control device 48 controls the first valve arrangement 44 into its first operating position and the second valve arrangement 46 into its second operating position in order to open the first gas passageway 38, but to close the second gas passageway 42.

Specifically, the control device 48 controls the first and the second valve arrangement 44, 46 in dependence on an oxygen concentration of the gas stream exiting the process chamber 12 through the second gas passageway 46 which is measured by means of an oxygen sensor 50. In particular, the control device 48 controls the first valve arrangement 44 into its first operating position and to control the second valve arrangement 46 into its second operating position in order to terminate the purging process and to achieve a pressure build-up in the process chamber 12 when the oxygen concentration of the gas stream exiting the process chamber 12 through the second gas passageway 46 falls below a predetermined threshold value. Thereby, a controlled Argon gas atmosphere having an oxygen concentration below the predetermined threshold value is built up in the process chamber 12.

Finally, the apparatus 10 comprises a circuit line 52 connected to the process chamber 12. A conveying device 54 and a filter 56 are disposed in the circuit line 52. The filter 56 serves to filter particulate impurities such as, for example, dust, soot or powder particles from a gas stream discharged from the process chamber 12 during irradiating electromagnetic or particle radiation onto the raw material powder applied onto the carrier 16 in order to produce a work piece made of said raw material powder by an additive layer construction method. After passing the filter 56 the gas stream is recirculated into the process chamber 12.

A further oxygen sensor 58 detects the oxygen content in the gas stream discharged from the process chamber 12 via the circuit line 52. The control device 48 controls the process of irradiating electromagnetic or particle radiation onto the raw material powder applied onto the carrier 16 in order to produce a work piece made of said raw material powder by an additive layer construction method in dependence on the oxygen content of the gas stream measured by means of the sensor 58. In particular, the control device 48 interrupts the process of irradiating electromagnetic or particle radiation onto the raw material powder applied onto the carrier 16 in order to produce a work piece made of said raw material powder by an additive layer construction method when the oxygen concentration in the gas stream discharged from the process chamber 12 via the circuit line 52 exceeds a predetermined threshold value. As a result, undesired oxidation reactions upon irradiating the raw material powder are prevented.

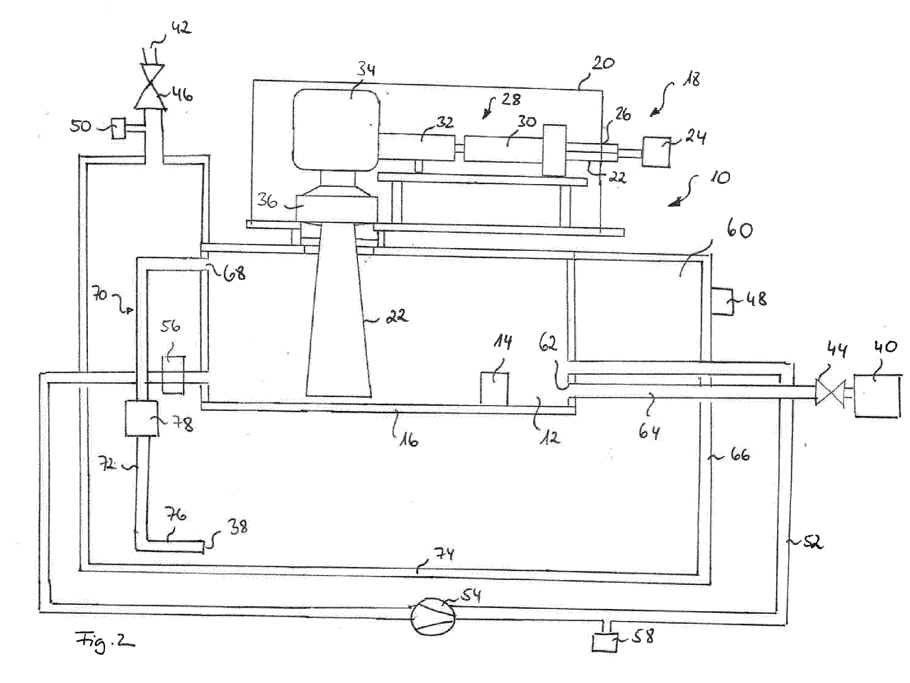

A second embodiment of an apparatus 10 for producing three-dimensional work pieces as depicted in Figure 2 differs from the apparatus according to Figure 1 in that the process chamber 12 is accommodated within and fluidly connected to a pressure chamber 60. The pressure chamber 60 is sealable against the ambient atmosphere and adapted to be held under an elevated pressure which is higher than the ambient pressure, i.e. higher than 1013 mbar. The pressure chamber 60 accommodating the process chamber 12 is provided with a first gas passageway 38 for supplying the pressure chamber 60 with a first gas from a gas source 40 and a second gas passageway 46 for discharging from the pressure chamber 60 a second gas present within the pressure chamber 60 prior to supplying the first gas from the gas source 40 to the pressure chamber 60.

Like in the apparatus 10 of Figure 1, also in the apparatus 10 depicted in Figure 2 the first and the second gas passageway 38, 42 are positioned in dependence on a ratio between a specific density of the first gas supplied to the pressure chamber 60 from the gas source 40 and a specific density of the second gas present within the pressure chamber 60 prior to supplying the first gas from the gas source 40 to the pressure chamber 60 such that the gas passageway 38, 42 which is flown through with the gas having the higher specific density is disposed below the gas passageway 38, 42 which is flown through with the gas having the lower specific density. Again, the second gas present within the pressure chamber 60 prior to supplying the first gas from the gas source 40 to the pressure chamber 60 is air. The first gas supplied to the pressure chamber 60 from the gas source 40 is Argon, i.e. an inert gas allowing the build-up of a controlled inert gas atmosphere in the pressure chamber 60 and having a specific density which is higher than the specific density of air. Hence, the first gas passageway 38 flown through with the first gas Argon is disposed below the second gas passageway 42 flown through with air.

Like in the apparatus 10 of Figure 1, a first valve arrangement 44 in a first operating position is adapted to open the first gas passageway 38 and in a second operating position is adapted to close the first gas passageway 38. The first valve arrangement 44 thus serves to control the supply of the first gas, i.e. the Argon gas to the pressure chamber 60. A second valve arrangement 46 in a first operating position is adapted to open the second gas passageway 42 and in a second operating position is adapted to close the second gas passageway 42. The gas flow exiting the pressure chamber 60 thus may be controlled by means of the second valve arrangement 46. The first and the second valve arrangement 44, 46 are controlled by means of a control device 48.

For purging the pressure chamber 60 with the Argon gas provided by the gas source 40, the control device 48 controls the first and the second valve arrangement 44, 46 into their first operating position in order to open the first and the second gas passageway 38, 42. Further, in case a pressure build-up in the pressure chamber 60 should be achieved, the control device 48 controls the first valve arrangement 44 into its first operating position and the second valve arrangement 46 into its second operating position in order to open the first gas passageway 38, but to close the second gas passageway 42.

Specifically, the control device 48 controls the first and the second valve arrangement 44, 46 in dependence on an oxygen concentration of the gas stream exiting the pressure chamber 60 through the second gas passageway 46 which is measured by means of an oxygen sensor 50. In particular, the control device 48 controls the first valve arrangement 44 into its first operating position and to control the second valve arrangement 46 into its second operating position in order to terminate the purging process and to achieve a pressure build-up in the pressure chamber 60 when the oxygen concentration of the gas stream exiting the pressure chamber 60 through the second gas passageway 46 falls below a predetermined threshold value. Thereby, a controlled Argon gas atmosphere having an oxygen concentration below the predetermined threshold value is built up in the pressure chamber 60.

In the second embodiment of an apparatus 10 for producing three-dimensional work pieces the process chamber 12 accommodated within the pressure chamber 60 comprises a gas inlet 60 which is connected to the gas source 40 via a gas supply line 64. The gas supply line 64 is guided into the pressure chamber 60 through a wall 66 of the pressure chamber 60 in a sealing manner. Further, the process chamber 12 comprises a gas outlet 68 which is connected to the first gas passageway 38 of the pressure chamber 60 for supplying the pressure chamber 60 with Argon gas from the gas source 40. Hence, the Argon gas exiting the gas source 40 first is guided through the process chamber 12 for purging the process chamber 12 before it is directed into the pressure chamber 60. The gas inlet 60 and the gas outlet 68 of the process chamber 12 are positioned as described above for the first and the second gas passageway 38, 44 of the process chamber 12 in the first embodiment of an apparatus 10 according to Figure 1.

The first gas passageway 38 for supplying the pressure chamber 60 with Argon gas from the gas source 40 is connected to the gas outlet 68 of the process chamber 60 via a gas line 70. The gas line 70 has a first section 72 extending downwards within the pressure chamber 60 from the gas outlet 68 of the process chamber 12 in the direction of a base 74 of the pressure chamber 60. Downstream of the first section 72 the gas line 70 has a second section 76 extending substantially perpendicular to the first section 72 and substantially parallel to the base 74 of the pressure chamber 60. A filter 78 is disposed in the gas line 70 which serves to filter particulate impurities such as, for example, dust, soot or powder particles from the gas stream exiting the process chamber 12 through the gas outlet 68 of the process chamber 12 before the gas stream is directed into the pressure chamber 12 via the first gas passageway 38.

Like the first embodiment of an apparatus 10 depicted in Figure 1, the second embodiment of an apparatus 10 for producing three-dimensional work pieces according to Figure 2 comprises a circuit line 52 connected to the process chamber 12, wherein a conveying device 54 and a filter 56 for filtering particulate impurities such as, for example, dust, soot or powder particles from a gas stream discharged from the process chamber 12 during irradiating electromagnetic or particle radiation onto the raw material powder applied onto the carrier 16 are disposed in the circuit line 52. An oxygen sensor 58 serves to measure the oxygen concentration of the gas stream flowing through the circuit line 52. While the filter 56 is disposed inside the pressure chamber 60, the conveying device 54 is disposed outside of the pressure chamber 60. Hence, the circuit line 52, in the second embodiment of an apparatus 10 for producing three-dimensional work pieces, is guided into the pressure chamber 60 through the wall 66 of the pressure chamber 60 in a sealing manner.

Like in the first embodiment according to Figure 2, the control device 48 again interrupts the process of irradiating electromagnetic or particle radiation onto the raw material powder applied onto the carrier 16 when the oxygen concentration of the gas stream flowing through the circuit line 52 which is measured by means of the sensor 58 exceeds a predetermined threshold value.

## Claims

1. Apparatus (10) for producing three-dimensional work pieces, the apparatus (10) comprising:
- a process chamber (12) accommodating a carrier (16) and a powder application device (14) for applying a raw material powder onto the carrier (16), and
- an irradiation device (18) for selectively irradiating electromagnetic or particle radiation onto the raw material powder applied onto the carrier (16) in order to produce a work piece made of said raw material powder by an additive layer construction method,
the process chamber (12) being sealable against the ambient atmosphere, being adapted to be held under an elevated pressure which is higher than the ambient pressure, and being provided with a first gas passageway (38) for supplying the process chamber with a first gas from a gas source (40) and a second gas passageway (42) for discharging from the process chamber (12) a second gas present within the process chamber (12) prior to supplying the first gas from the gas source (40) to the process chamber (12), wherein the first and the second gas passageway (38, 42) are positioned in dependence on a ratio between a specific density of the first gas supplied to the process chamber (12) from the gas source (40) and a specific density of the second gas present within the process chamber (12) prior to supplying the first gas from the gas source (40) to the process chamber (12) such that the gas passageway (38, 42) which is flown through with the gas having the higher specific density is disposed below the gas passageway (38, 42) which is flown through with the gas having the lower specific density.

2. Apparatus according to claim 1,
wherein the second gas present within the process chamber (12) prior to supplying the first gas from the gas source (40) to the process chamber (12) is air, and/or wherein the first gas supplied to the process chamber (12) from the gas source (40) is an inert gas, in particular Argon or Helium.

3. Apparatus according to claim 1 or 2,
further comprising:
- a first valve arrangement (44) which in a first operating position is adapted to open the first gas passageway (38) and which in a second operating position is adapted to close the first gas passageway (38),
- a second valve arrangement (46) which in a first operating position is adapted to open the second gas passageway (42) and which in a second operating position is adapted to close the second gas passageway (42), and
- a control device (48) which is adapted to control the first valve arrangement (44) into its first operating position and to control the second valve arrangement (46) into its second operating position in order to achieve a pressure build-up in the process chamber (12).

4. Apparatus according to claim 3,
wherein the control device (48) is adapted to control the first and the second valve arrangement (44, 46) in dependence on a concentration of at least a component of the second gas present in a gas stream exiting the process chamber (12) through the second gas passageway (42).

5. Apparatus according to claim 4,
wherein the control device (48) is adapted to control the first valve arrangement (44) into its first operating position and to control the second valve arrangement (46) into its second operating position in order to achieve a pressure build-up in the process chamber (12) when a concentration of at least a component of the second gas present in a gas stream exiting the process chamber (12) through the second gas passageway (42) falls below a predetermined threshold value.

6. Apparatus (10) for producing three-dimensional work pieces, the apparatus (10) comprising:
- a process chamber (12) accommodating a carrier (16) and a powder application device (14) for applying a raw material powder onto the carrier (16), and
- an irradiation device (18) for selectively irradiating electromagnetic or particle radiation onto the raw material powder applied onto the carrier (16) in order to produce a work piece made of said raw material powder by an additive layer construction method,
wherein the process chamber (12) is accommodated within and fluidly connected to a pressure chamber (60), the pressure chamber (60) being sealable against the ambient atmosphere, being adapted to be held under an elevated pressure which is higher than the ambient pressure, and being provided with a first gas passageway (38) for supplying the pressure chamber (60) with a first gas from a gas source (40) and a second gas passageway (42) for discharging from the pressure chamber (60) a second gas present within the pressure chamber (60) prior to supplying the first gas from the gas source (40) to the pressure chamber (60), wherein the first and the second gas passageway (38, 42) are positioned in dependence on a ratio between a specific density of the first gas supplied to the pressure chamber (60) from the gas source (40) and a specific density of the second gas present within the pressure chamber (60) prior to supplying the first gas from the gas source (40) to the pressure chamber (60) such that the gas passageway (38, 42) which is flown through with the gas having the higher specific density is disposed below the gas passageway (38, 42) which is flown through with the gas having the lower specific density.

7. Apparatus according to claim 6,
wherein the second gas present within the pressure chamber (60) prior to supplying the first gas from the gas source (40) to the pressure chamber (60) is air, and/or wherein the first gas supplied to the pressure chamber (60) from the gas source (40) is an inert gas, in particular Argon or Helium.

8. Apparatus according to claim 6 or 7,
further comprising:
- a first valve arrangement (44) which in a first operating position is adapted to open the first gas passageway (38) and which in a second operating position is adapted to close the first gas passageway (38),
- a second valve arrangement (46) which in a first operating position is adapted to open the second gas passageway (42) and which in a second operating position is adapted to close the second gas passageway (42), and
- a control device (48) which is adapted to control the first valve arrangement (44) into its first operating position and to control the second valve arrangement (46) into its second operating position in order to achieve a pressure build-up in the pressure chamber (60).

9. Apparatus according to claim 8,
wherein the control device (48) is adapted to control the first and the second valve arrangement (44, 46) in dependence on a concentration of at least a component of the second gas present in a gas stream exiting the pressure chamber (60) through the second gas passageway (42).

10. Apparatus according to claim 9,
wherein the control device (48) is adapted to control the first valve arrangement (44) into its first operating position and to control the second valve arrangement (46) into its second operating position in order to achieve a pressure build-up in the pressure chamber (60) when a concentration of at least a component of the second gas present in a gas stream exiting the pressure chamber (60) through the second gas passageway (42) falls below a predetermined threshold value.

11. Apparatus according to any one of claims 6 to 10,
wherein a gas inlet (62) of the process chamber (12) is connected to the gas source (40), and wherein a gas outlet (68) of the process chamber (12) is connected to the first gas passageway (38) for supplying the pressure chamber (60) with the first gas from the gas source (40).

12. Apparatus according to claim 11,
wherein the first gas passageway (38) for supplying the pressure chamber (60) with the first gas from the gas source (40) is connected to the gas outlet (68) of the process chamber (12) via a gas line (70), the gas line (70) in particular having a first section (72) extending downwards within the pressure chamber (60) from the gas outlet (68) of the process chamber (12) in the direction of a base (74) of the pressure chamber (60).

13. Apparatus according to claim 12,
wherein a first filter (78) is disposed in the gas line (70).

14. Apparatus according to any one of claims 1 to 14,
further comprising:
- a circuit line (52) connected to the process chamber (12),
- a conveying device (54) disposed in the circuit line (52), and
- and a second filter (56) disposed in the circuit line (52) and being adapted to filter particles from a gas stream discharged from the process chamber (12) during irradiating electromagnetic or particle radiation onto the raw material powder applied onto the carrier (16) in order to produce a work piece made of said raw material powder by an additive layer construction method.

15. Apparatus according to claim 14,
further comprising:
- a further control device (48) which is adapted to control the process of irradiating electromagnetic or particle radiation onto the raw material powder applied onto the carrier (16) in order to produce a work piece made of said raw material powder by an additive layer construction method in dependence on a composition of the gas gas stream discharged from the process chamber (12) via the circuit line (52), and in particular to interrupt the process of irradiating electromagnetic or particle radiation onto the raw material powder applied onto the carrier (16) in order to produce a work piece made of said raw material powder by an additive layer construction method when a concentration of at least a component of the gas stream discharged from the process chamber (12) via the circuit line (52) exceeds a predetermined threshold value.
